# EUROPÄISCHE PATENTSCHRIFT

(11) **EP 2 445 791 B1**
(45) Veröffentlichungstag und Bekanntmachung des Hinweises auf die Patenterteilung: **19.02.2014**
(21) Anmeldenummer: 09776797.4
(22) Anmeldetag: 22.06.2009
(51) Int. Cl.: B64D 11/06, B64D 9/00

(54) **FUNKTIONSELEMENT, VERFAHREN ZUR HERSTELLUNG EINES FUNKTIONSELEMENTS**
FUNCTIONAL ELEMENT, METHOD FOR PRODUCING A FUNCTIONAL ELEMENT
ÉLÉMENT FONCTIONNEL ET SON PROCÉDÉ DE PRODUCTION

(43) Veröffentlichungstag der Anmeldung: 02.05.2012
(73) Patentinhaber: Telair International GmbH, 83714 Miesbach (DE)
(72) Erfinder: HUBER, Thomas, 83727 Schliersee (DE); HOLZNER, Richard, 83071 Stephanskirchen (DE)
(74) Vertreter: Bohnenberger, Johannes
(86) Internationale Anmeldenummer: PCT/EP2009/004483
(87) Internationale Veröffentlichungsnummer: WO 2010/149178

(56) Entgegenhaltungen:
- GB-A- 2 411 429
- US-A- 3 262 588
- US-A- 5 131 606
- US-A- 5 169 091
- US-A1- 2007 232 101

## Beschreibung

Die Erfindung betrifft ein Funktionselement gemäß dem Patentanspruch 1 und ein Verfahren zur Herstellung eines Funktionselements gemäß dem Patentanspruch 9.

Es ist bekannt, dass Laderäume, z.B. Frachträume oder Passagierräume, von Flugzeugen für unterschiedliche Verwendungen häufig umgebaut werden müssen. Beispielsweise kann es in Abhängigkeit von der Verwendung des Flugzeugs notwendig sein, dass Sitze für Passagiere in dem Frachtraum des Flugzeugs angebracht werden müssen. In einem anderen Verwendungsfall kann beispielsweise auch der Passagierraum ausschließlich zur Aufnahme von Ladung verwendet werden. Einige Flugzeuge, beispielsweise Militärmaschinen, verfügen lediglich über einen Laderaum, der zur Ladung von Passagieren und/oder von Gütern verwendet werden kann. Um eine optimale Nutzung der Laderäume von Flugzeugen zu gewährleisten, sind Sitzschienen montiert, die es ermöglichen, Sitze schnell und einfach anzubringen und deren Position zu verändern. Es ist bekannt, diese Sitzschienen auch als Verankerungsbasis für Riegelelemente oder andere Funktionselemente (z.B. Rollenelemente, Befestigungsösen usw.) zu verwenden. Die verwendeten Funktionselemente verfügen über geeignete Befestigungsmechanismen zur Verankerung in den Sitzschienen.

Der bereitgestellte Befestigungsmechanismus muss robust und dazu geeignet sein, hohe Lasten in das Flugzeugdeck einzuleiten. Die Anbringung der Funktionselemente muss schnell und einfach durchführbar sein.
Entsprechende Funktionselemente, die sich in einer Sitzschiene oder einer Lochschiene befestigen lassen, sind aus der US 3,262,588 bekannt. Hier wird unter anderem ein Rollenelement beschrieben, das in einer Sitzschiene angebracht werden kann. Zur Befestigung werden mehrere pilzförmige Elemente über Löcher in der Sitzschiene eingebracht und das Funktionselement derart verschoben, dass die pilzförmigen Elemente in einer Position zwischen zwei benachbarten Löchern zu liegen kommen, in der ein Entfernen des Funktionselements in z-Richtung nicht möglich ist, da dieses durch die Fortsätze der Elemente zwischen den Löchern gehalten wird. Um das Funktionselement in dieser Halteposition zu fixieren, hat es Fixierungszapfen, die parallel zu den pilzförmigen Elementen abgesenkt werden können und in ein Loch der Sitzschiene einrasten. Sobald die Fixierungszapfen herabgesenkt sind, lässt sich das Funktionselement nicht mehr in x-Richtung verschieben. Aufgrund der pilzförmigen Elemente und der Fixierungszapfen wird das Funktionselement in der Sitzschiene gehalten.

Die Montage der in der US 3,262,588 beschriebenen Funktionselemente erweist sich häufig als aufwändig, da es schwierig ist, die pilzförmigen Elemente in die einzelnen Löcher der Sitzschiene einzubringen. Auch beim Herausnehmen des Funktionselements kommt es häufig zu einem Verklemmen des Befestigungsmechanismus, so dass hier eine gesteigerte Sorgfalt angewandt werden muss. Des Weiteren umfasst das beschriebene Funktionselement zahlreiche mechanische Bauteile, die beim im Laderaum üblichen sorglosen Umgang häufig ersetzt werden müssen. Teilweise müssen ganze Funktionselemente ausgetauscht werden, da der zugehörige Befestigungsmechanismus defekt ist. Außerdem ist die Herstellung des Befestigungsmechanismus aufwändig und teuer.

Ein weiteres Beispiel für Funktionselemente zum Anbringen in Sitzschienen ist aus der US-A-5169091 bekannt.

Ausgehend von diesem Stand der Technik ist es Aufgabe der vorliegenden Erfindung, ein Funktionselement zur Befestigung in einer Sitzschiene bereitzustellen, das robust ist, sich einfach montieren und fertigen lässt und ein sicheres Verankern des Funktionselements in der Sitzschiene gewährleistet. Des Weiteren soll ein entsprechendes Verfahren zur Herstellung eines Funktionselements bereitgestellt werden.

Diese Aufgabe wird erfindungsgemäß durch das Funktionselement nach Anspruch 1 und das Verfahren nach Anspruch 9 gelöst.

Vorrichtungsseitig wird die Aufgabe insbesondere durch ein Funktionselement zur Befestigung in einer Sitzschiene eines Flugzeuges gelöst, wobei die Sitzschiene eine Vielzahl von Löchern hat, die in x-Richtung durch Schlitze miteinander verbunden und in einem Rastermaß angeordnet sind, umfassend:
- eine Befestigungsschiene mit einem in x-Richtung verlaufenden Steg und einer Vielzahl von Fortsätzen, welche den Steg zur Bildung eines T-Profils in eine y-Richtung überragen, wobei die Befestigungsschiene derart korrespondierend zur Sitzschiene ausgebildet ist, dass die Befestigungsschiene in die Sitzschiene einlegbar und entlang der x-Richtung in eine Halteposition verschiebbar ist, in der die Fortsätze zwischen den Löchern unter den Schlitzen sitzen,
- mindestens einen Fixierungszapfen, der beweglich an der Befestigungsschiene (30) angeordnet und in eine Sperrposition bringbar ist, in der der Fixierungszapfen in ein Loch der Sitzschiene so eingreift, dass das Funktionselement in x-Richtung fixiert ist, wobei der Steg zur Bildung
einer Aufnahme für den Fixierungszapfen in der Sperrposition abschnittsweise unterbrochen ist und die Befestigungsschiene zur Bildung eines Abschnitts, auf dem der Fixierungszapfen in der Sperrposition aufliegt, einstückig ausgestaltet ist.

Es wird also ein Funktionselement zur Befestigung in einer Sitzschiene bereitgestellt. Theoretisch ist es auch möglich, das erfindungsgemäße Funktionselement zur Befestigung in jeder beliebigen Lochschiene, umfassend eine Vielzahl von Löchern, die vorzugsweise in x-Richtung durch Schlitze miteinander verbunden sind, auszubilden. Vorzugsweise sind die Löcher in einem Rastermaß angeordnet. Es wäre jedoch auch möglich, die erfindungsgemäße Lehre auf Lochschienen, die Löcher mit unregelmäßigen Abständen aufweisen, anzuwenden. Die Ansprüche beziehen sich auf x-, y- und z-Richtungen. Vorzugsweise handelt es sich bei diesen Richtungsangaben um Vektoren aus einem kartesischen Koordinatensystem, wobei die x-Richtung der Längsrichtung der Sitzschiene und/oder der Befestigungsschiene entspricht. Die Löcher der Sitzschiene liegen vorzugsweise in der x-y-Ebene, die senkrecht zur z-Ebene aufgespannt ist.

Ein wesentlicher Gedanke der vorliegenden Anmeldung besteht darin, den Befestigungsmechanismus des Funktionselements als eine Befestigungsschiene auszubilden. Diese umfasst einen Steg und eine Vielzahl von Fortsätzen, die sich in die Schiene einsetzen lassen. Im eingesetzten Zustand kann die Befestigungsschiene innerhalb der Sitzschiene entlang der x-Richtung verschoben werden. Aufgrund der länglichen und/oder einstückigen Ausgestaltung der Befestigungsschiene kann es zu keiner Verkeilung des Funktionselements innerhalb der Sitzschiene kommen. Die Befestigungsschiene dient als Führung. Des Weiteren können an der Befestigungsschiene eine Vielzahl von Fortsätzen angeordnet werden, die das sichere und verteilte Einbringen der wirkenden Kräfte in die Sitzschiene gewährleisten. In der Halteposition sitzt vorzugsweise jeweils ein Fortsatz, der sich wechselseitig über den Steg erstreckt, zwischen einem Paar von benachbarten Löchern der Sitzschiene, unterhalb eines Schlitzes. Kräfte, die in z-Richtung wirken, werden unmittelbar über die Fortsätze in die Sitzschiene eingeleitet. Weitere Kräfte, die in Richtungen quer zur Längsrichtung (x-Richtung) der Befestigungsschiene wirken, werden ebenfalls von der Sitzschiene aufgenommen. Der eingerastete Fixierungszapfen sichert das Funktionselement gegen eine Verschiebung in x-Richtung ab und nimmt entsprechend gerichtete Kräfte zumindest teilweise auf.

Die Befestigungsschiene sollte mindestens zwei Fortsätze aufweisen und es sollte mindestens ein Fixierungszapfen zwischen den Fortsätzen angeordnet sein. Somit kann sichergestellt werden, dass sämtliche wirkenden Kräfte sicher in die Sitzschiene oder Sitzschienen eingeleitet werden.

Der Fixierungszapfen kann gegenüber den Fortsätzen in x-Richtung um ein halbes Rastermaß versetzt angeordnet sein. Theoretisch ist es möglich, nach dem Einsetzen der Befestigungsschiene in die Sitzschiene diese nur geringfügig gegeneinander zu verschieben, um die Halteposition einzunehmen. Vorzugsweise werden die Schienen gegeneinander um ein halbes Rastermaß versetzt, so dass ein optimaler Kraftschluss erzielt werden kann. Um die Befestigungsschiene in der Sitzschiene sicher zu fixieren, sollte der Fixierungszapfen gegenüber den Fortsätzen um das halbe Rastermaß verschoben sein. Somit kann der Fixierungszapfen nach einem entsprechenden Verschieben der Befestigungsschiene gegenüber der Sitzschiene in ein entsprechendes Loch der Sitzschiene einrasten.

Der Fixierungszapfen kann als Gewindebolzen ausgebildet sein. Es ist denkbar, den Fixierungszapfen mittels Federelementen zwischen der Sperrposition und einer Freigabeposition hin und herzubewegen und für die Sperrposition weitere Mittel bereitzustellen, die den Fixierungszapfen dort sichern. Vorzugsweise handelt es sich bei dem Fixierungszapfen um einen Gewindebolzen, der in einer entsprechenden Bohrung am oder im Funktionselement angeordnet ist und zur Einnahme der einzelnen Positionen ein- und ausgeschraubt werden kann.

Das Funktionselement kann als Strangpressprofil ausgebildet sein, aus welchem die Fortsätze gesondert, insbesondere einstückig entlang einer Basis des Funktionselements herausgeformt sind. Die kompakte Ausgestaltung der Befestigungsschiene insbesondere mit dem entsprechenden T-Profil ermöglicht es, das Funktionselement teilweise oder insgesamt in einem Strangpressverfahren herzustellen. Die Fortsätze können gesondert, beispielsweise durch ein Fräsen, aus dem T-Profil herausgeformt werden.

Der Steg ist zur Bildung einer Aufnahme für den Fixierungszapfen in der Sperrposition zumindest abschnittsweise unterbrochen.

Vorzugsweise ist der Steg zusammen mit den Fixierungszapfen einstückig ausgebildet und erstreckt sich entlang einer Basis des Funktionselements. Vorzugsweise ist der Fixierungszapfen in diese Anordnung derart integriert, dass er teilweise von dem Steg verdeckt wird. Somit dient der Steg als Führung und Schutz für den Fixierungszapfen. In einer weiteren Ausgestaltung können die Seitenwände der Aufnahme eine Gewindestruktur umfassen, um ein Eindrehen und Ausdrehen des Fixierungszapfens zu ermöglichen.

Theoretisch ist es möglich, das erfindungsgemäße Funktionselement zur Befestigung von Sitzen, Rollenelementen, Kugelelementen usw. zu verwenden. Vorzugsweise handelt es sich bei dem Funktionselement um ein Riegelelement, das beispielsweise zur Fixierung von Containern verwendet werden kann.

Erfindungsgemäß soll ebenfalls eine Anordnung, umfassend mindestens eine Sitzschiene und mindestens ein Funktionselement wie vorab beschrieben, beansprucht werden.

Verfahrensseitig wird die eingangs genannte Aufgabenstellung vorzugsweise durch ein Verfahren zur Herstellung eines Funktionselements für ein Flugzeug gelöst, wobei das Funktionselement Befestigungsschienen zur Befestigung des Funktionselements in einer Sitzschiene umfasst, die eine Vielzahl von durch Schlitze verbundenen Löchern hat, wobei das Verfahren die folgenden Schritte aufweist:
- Strangpressen eines Profils, insbesondere I-Profils, das sich in x-Richtung erstreckt und bei dem ein erster und ein zweiter Flansch durch einen sich in z-Richtung erstreckenden Steg verbunden sind,
- Abtragen von Aussparungen an dem zweiten Flansch zur Ausbildung von in einem Rastermaß beabstandeten Fortsätzen, die den Steg in eine y-Richtung überragen, wobei der Steg und die Fortsätze derart ausgebildet sind, dass diese in die Lochschiene einsetzbar und in eine Halteposition verschiebbar sind, in der die Fortsätze zwischen den Löchern unter den Schlitzen sitzen,
- Herstellen mindestens einer Bohrung in z-Richtung, die den Steg zumindest teilweise unterbricht oder parallel zu diesem verläuft,
- Einsetzen mindestens eines Fixierungszapfens in die Bohrung derart, dass sich dieser innerhalb der Bohrung zwischen einer Sperrposition und einer Freigabeposition hin und her bewegen lässt, wobei der Fixierungszapfen zumindest abschnittsweise einen Durchmesser hat der größer als eine Wandstärke des Stegs ist und in der Sperrposition in ein Loch der Lochschiene eingreift, um das Funktionselement in der Halteposition in x-Richtung zu fixieren, wobei das Herstellen der mindestens einen Bohrung in z-Richtung derart erfolgt, dass ein einstückiger Abschnitt der Befestigungsschiene verbleibt, auf dem der Fixierungszapfen in der Sperrposition aufliegt.

Für das Verfahren ergeben sich die bereits in Verbindung mit der Vorrichtung beschriebenen Vorteile. Um Kosten bei der Herstellung zu sparen, kann das erfindungsgemäße Funktionselement im Strangpressverfahren hergestellt werden, wobei einzelne wichtige Elemente nachträglich durch ein Abtragen oder Ausfräsen herausgeformt werden. Nach dem Strangpressen können also auf äußerst effiziente Weise die Fortsätze ausgefräst oder geschnitten werden und eine entsprechende Bohrung für den Fixierungszapfen bereitgestellt werden.

In einer Ausführungsform haben die Fortsätze zumindest entlang der y-Richtung einen Durchmesser, der im Wesentlichen gleich dem Durchmesser der Bohrung entspricht.

Die Bohrung sollte mittig zum Steg angeordnet sein. Die Bohrung sollte so vorgenommen werden, dass das Zentrum der Bohrung auf einer Symmetrieebene, die sich in x-Richtung des Steges erstreckt, liegt. Soweit durch das Strangpressverfahren ein Profil oder I-Profil hergestellt wird, kann der zweite Flansch, vorzugsweise nach weiteren Verarbeitungsschritten, in die Fortsätze verwandelt werden, während der erste Flansch eine Basis des Funktionselements ausbildet. Diese Basis kann dazu dienen, weitere funktionale Elemente des Funktionselements aufzunehmen. Beispielsweise kann eine Riegelkralle an dieser Basis verankert werden.

Weitere vorteilhafte Ausführungsformen ergeben sich gemäß den Unteransprüchen.

Nachfolgend wird die Erfindung anhand von einigen Ausführungsbeispielen beschrieben, die mittels Abbildungen näher erläutert werden. Hierbei zeigen:
- - Fig. 1: einen Längsschnitt durch eine Sitzschiene, in die ein erfindungsgemäßes Regelelement eingesetzt ist;
- - Fig. 2: das Riegelelemente aus Fig. 1 mit Befestigungsschiene in einer Seitenansicht;
- - Fig. 3: eine Detailansicht der Befestigungsschiene des Riegelelements aus Fig. 2;
- - Fig. 4: eine Draufsicht auf das Riegelelement aus Fig. 1;
- - Fig. 5: eine Unteransicht des Riegelelements aus Fig. 1;
- - Fig. 6: einen Längsschnitt durch das Riegelelement aus Fig. 1 entlang der x-z-Ebene;
- - Fig. 7: eine Vorderansicht des Riegelelements aus Fig. 1; und
- - Fig. 8: eine perspektivische Ansicht des Riegelelements aus Fig. 1.

In der nachfolgenden Beschreibung werden für gleiche und gleich wirkende Teile dieselben Bezugsziffern verwendet.

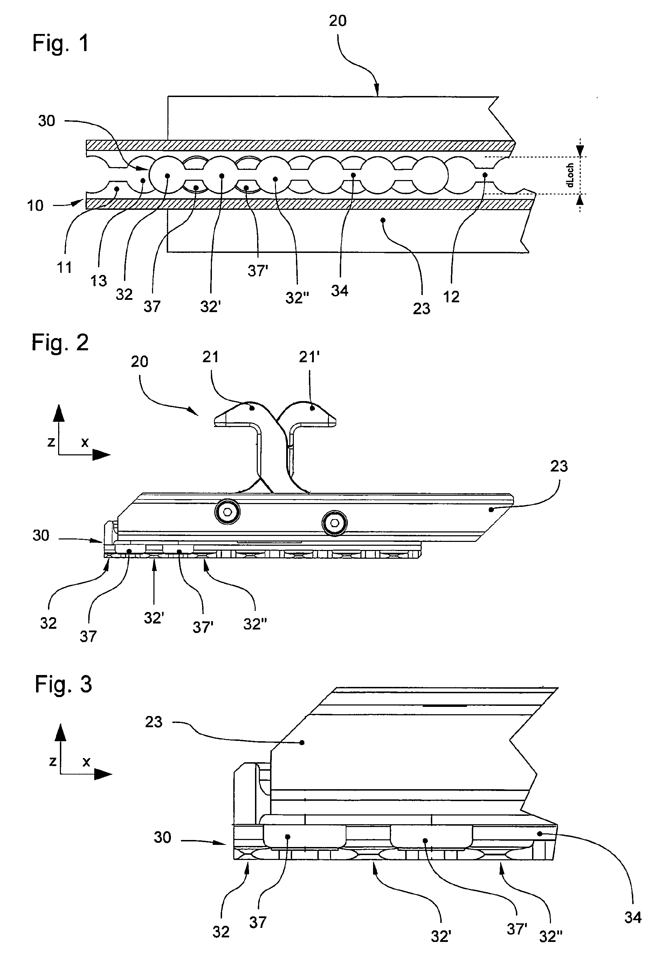

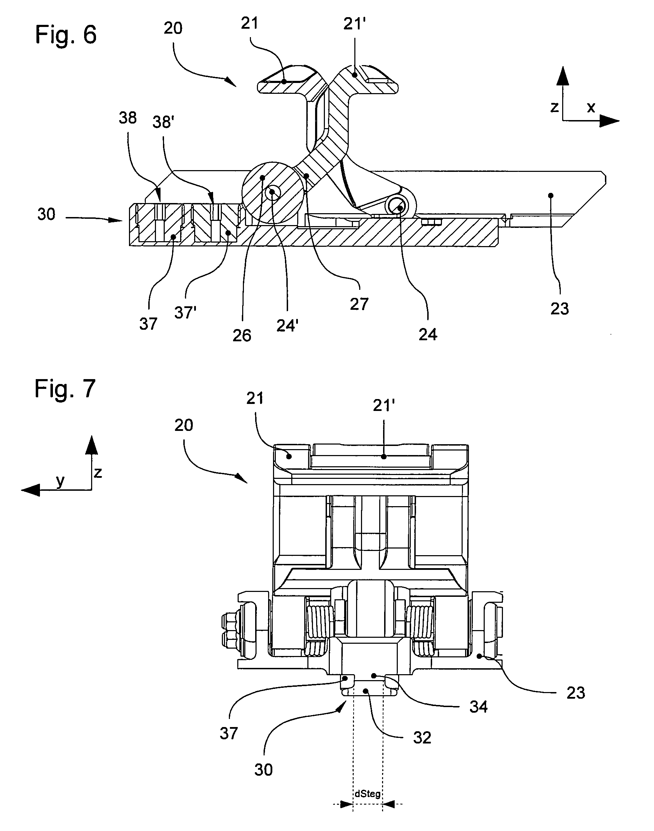

Fig. 1 zeigt ein erfindungsgemäßes Funktionselement, nämlich ein Riegelelement 20, in einer Unteransicht. Das Riegelelement 20 umfasst eine Befestigungsschiene 30, die sich entlang einer Riegelbasis 23 des Riegelelements 20 in x-Richtung erstreckt. Die Befestigungsschiene hat einen Steg 34 und eine Vielzahl von Fortsätzen 32, 32', 32". Wie in Fig. 7 gezeigt, hat die Befestigungsschiene 30 im Querschnitt ein T-Profil, wobei sich der Steg 34 in einer Vorderansicht entlang einer z-Richtung erstreckt und durch die Fortsätze 32, 32', 32", insbesondere durch den Fortsatz 32 abgeschlossen wird. Die Fortsätze 32 bis 32' überragen also den Steg 34 wechselseitig in y-Richtung.

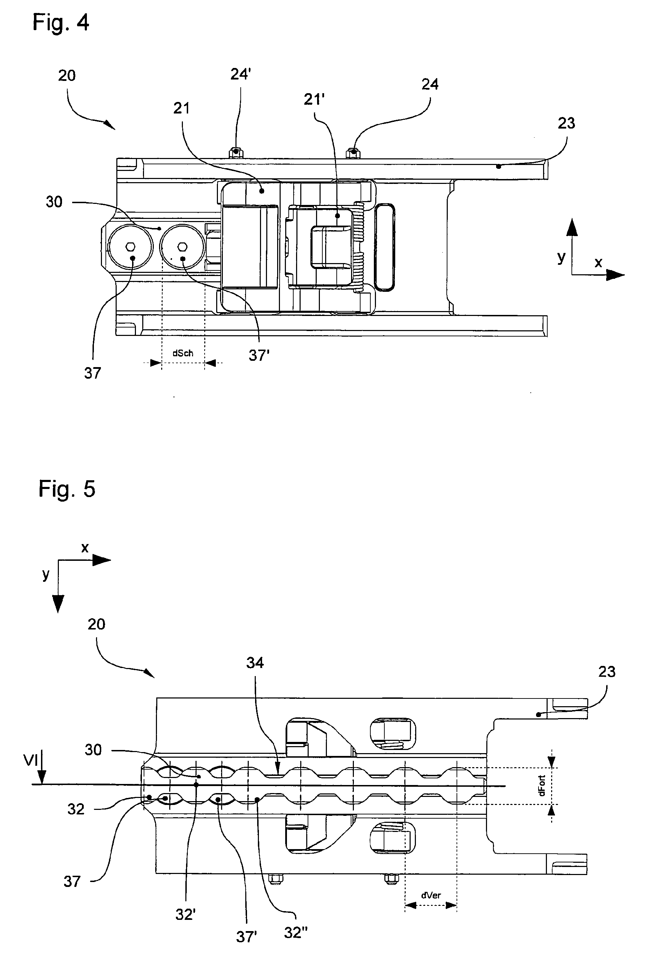

Wie aus der Fig. 1 ersichtlich, haben die Fortsätze 32 bis 32" in der x-y-Ebene eine im Wesentlichen kreisförmige Ausprägung und weisen einen regelmäßigen Abstand zueinander auf. Die Fortsätze 32 bis 32" sind in einem regelmäßigen Rastermaß angeordnet. Vorzugsweise sind die Fortsätze 32 bis 32" gegenüber ihrem Nachbar um ca. 2,54 cm (1 Zoll) in x-Richtung versetzt. Sie weisen also, wie in Fig. 5 gezeigt, einen Fortsatzversatz d_{Ver} von ca. 2,54 cm auf.

Somit ist die Befestigungsschiene 30 korrespondierend zu einer Lochschiene 10 ausgebildet, die eine Vielzahl von Lochschienenaussparungen 13 umfasst, die durch Schlitze 12 miteinander verbunden sind. In einem Ausführungsbeispiel handelt es sich bei den Lochschienenaussparungen 13 um Löcher, die einen Lochdurchmesser d_{Loch} (vgl. Fig. 1) von ca. 2 cm haben. Auch die Lochschienenaussparungen 13 sind in einem Rastermaß mit einem Lochversatz von ca. 2,54 cm (1 Zoll) angeordnet. Der Lochversatz entspricht also im Wesentlichen dem Fortsatzversatz d_{Ver}.

Fig. 1 zeigt das Riegelelement 20 in einer Halteposition in der Lochschiene 10. Zur Einnahme dieser Position wurde die Befestigungsschiene 30 mit den Fortsätzen 32 bis 32' in die Lochschienenaussparungen 13 eingesetzt und in x-Richtung um ca. 1,27 cm (1/2 Zoll) verschoben. In der Halteposition befinden sich die Fortsätze 32 bis 32' in Deckung mit Ausbuchtungen 11 der Lochschiene 10. Die Fortsätze 32 bis 32" sind also in den Schlitzen 12 verankert und können Kräfte quer zur x-Richtung in die Lochschiene 10 einleiten.

Um das Riegelelement 20 in der Halteposition gegen ein Verschieben in x-Richtung abzusichern, umfasst dieses eine erste Fixierschraube 37 und eine zweite Fixierschraube 37'.

Wie in den Fig. 2, 3 und 6 gezeigt, greifen diese Fixierschrauben 37, 37' in entsprechende Gewinde innerhalb der Riegelbasis 23 ein. Durch eine Rotation der Fixierschrauben 37, 37' lassen sich diese innerhalb des Stegs 34 absenken und herausdrehen. Die Fig. 2, 3 und 6 zeigen die Fixierschrauben 37, 37' in einer abgesenkten Position, nämlich der Sperrposition. In dieser Sperrposition ragen die Fixierschrauben 37, 37' wechselseitig über den Steg 34 in y-Richtung heraus (vgl. Fig. 7) und greifen so in eine Lochschienenaussparung 13 ein, dass die Befestigungsschiene 30 in der Lochschiene 10 in x-Richtung fixiert ist. Um das Eindrehen und Entfernen der Fixierschrauben 37, 37' zu erleichtern, weisen diese hexagonale Sechskantöffnungen 38, 38' auf, in die sich ein Inbus einsetzen lässt. Eine entsprechende Bohrung zur Aufnahme der ersten Fixierschraube 37 befindet sich mittig zwischen dem ersten Fortsatz 32 und dem zweiten Fortsatz 32'. Wie in der Unteransicht der Fig. 1 gezeigt, überlappt diese Bohrung teilweise mit den Fortsätzen 32, 32'. Der Durchmesser der Bohrungen sowie ein Fixierschraubendurchmesser d_{Sch} entspricht im Wesentlichen dem Fortsatzdurchmesser d_{Fort} und ist deutlich größer als die Stegwanddicke d_{Steg} (vgl. Fig. 7).

Die zweite Fixierschraube 37' mit entsprechender Bohrung ist korrespondierend zur ersten Fixierschraube 37 zwischen dem zweiten Fortsatz 32' und dem dritten Fortsatz 32" angeordnet.

Die Fixierschrauben 37, 37' sind gegenüber den Fortsätzen 32 bis 32" derart in x-Richtung versetzt angeordnet, dass diese in der Halteposition mit den Lochschienenaussparungen 13 in Deckung stehen. Sie können also in der Halteposition in die Schiene 10, genauer gesagt in entsprechende Lochschienenaussparungen 13 abgesenkt werden, um das Riegelelement 20 in der Lochschiene 10 zu verriegeln.

Wie in den Fig. 2, 3 und 6 gezeigt, liegen die Fixierschrauben 37, 37' in der Sperrposition auf Abschnitten des Stegs 34 auf. Somit bilden diese Abschnitte des Stegs 34 eine Begrenzung für die Fixierschrauben 37, 37' und verhindern ein zu tiefes Eindringen der Fixierschrauben 37, 37'.

Das Riegelelement 20 hat neben der Riegelbasis 23 eine erste Riegelkralle 21 und eine zweite Riegelkralle 21' (vgl. Fig. 2, 4 und 7), die dazu ausgebildet sind, Frachtcontainer aufzunehmen und diese festzuhalten. Beim Beladen des Laderaums lassen sich die Riegelkrallen 21, 21' derart versenken, dass diese nicht über die Riegelbasis 23 herausragen. Die Container können das Riegelelement 20 also ungehindert passieren.

Das vorhergehend beschriebene Ausführungsbeispiel des Riegelelements 20 verfügt über einen Steg 34 und zwei Fixierschrauben 37, 37'. Die erfindungsgemäße Lehre lässt sich auch mit nur einer Fixierschraube 37 oder einer Vielzahl von Fixierschrauben 37, 37' durchführen.

Gemäß dem beschriebenen Ausführungsbeispiel sind die Fixierschrauben 37, 37' zwischen dem ersten und dem zweiten Fortsatz 32, 32' bzw. dem zweiten und dem dritten Fortsatz 32', 32" positioniert. Die Fixierungsschrauben 37, 37' können jedoch auch an jeder beliebigen anderen Stelle entlang der Befestigungsschiene 30 angeordnet sein.

Vorab wurde ein Riegelelement 20 beschrieben. Die erfindungsgemäße Befestigungsschiene 30 lässt sich jedoch auch für Flugzeugsitze, Rollenanordnungen und andere Befestigungselemente verwenden, die in Sitzschienen verankert werden sollen.

In dem beschriebenen Ausführungsbeispiel hat die Lochschiene 10 den Lochdurchmesser d_{Loch} und die Fortsätze 32 bis 32' den Fortsatzdurchmesser d_{Fort} von ca. 2 cm. In einem weiteren Ausführungsbeispiel können andere Maße gewählt werden.

Wie in der Fig. 6 gezeigt, ist die erste Riegelkralle 21 drehbeweglich auf einer ersten Montagewelle 24 und die zweite Riegelkralle 21' drehbeweglich auf einer zweiten Montagewelle 24' montiert. In der in Fig. 6 gezeigten Position überkreuzen sich die Riegelkrallen 21, 21' und greifen derart ineinander ein, dass ein Fixieren von Transportgütern mittels dieser möglich ist. Für das Be- und Entladen der Transportgüter ist es jedoch notwendig, dass die Riegelkrallen 21, 21' derart innerhalb der Riegelbasis 23 versenkbar sind, dass diese überfahren werden können. Die zweite Riegelkralle 21' greift derart in eine Öffnung der ersten Riegelkralle 21, dass die zweite Riegelkralle 21' durch ein Aufbringen einer Kraft in z-Richtung auf den Kopf der Riegelkralle 21' herabgesenkt werden kann. Die herabgesenkte zweite Riegelkralle 21' gibt die erste Riegelkralle 21 frei, so dass diese ebenso wie die zweite Riegelkralle 21' versenkt werden kann. Im in Fig. 6 gezeigten Querschnitt lassen sich also beide Riegelkrallen 21, 21' durch eine Rotation entgegen dem Uhrzeigersinn versenken. In diesem versenkten Zustand liegen die Riegelkrallen 21, 21' im Wesentlichen parallel zueinander innerhalb der Riegelbasis 23. In einem bevorzugten Ausführungsbeispiel enthält das Riegelelement 20 Federelemente, die die erste Riegelkralle 21 nach einer Freigabe durch die zweite Riegelkralle 21' automatisch in die besagte herabgesenkte Position bringen. Weitere Federelemente können vorgesehen sein, um die zweite Riegelkralle 21' in der in Fig. 6 gezeigten aufrechten Position zu halten.

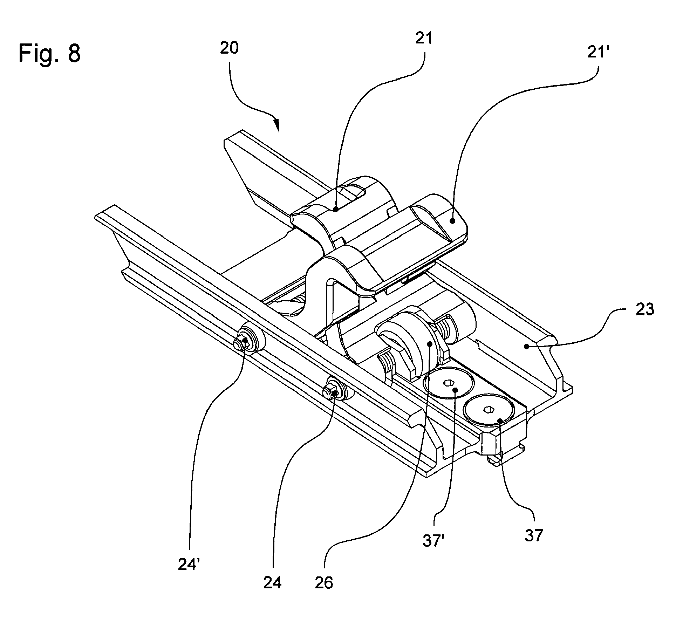

In einem Ausführungsbeispiel der vorliegenden Erfindung weist die zweite Riegelkralle 21' eine Rampe 27 auf, die derart über die Riegelbasis 23 und die erste Riegelkralle 21 hinausragt, dass bei einem Aufbringen einer Kraft in x-Richtung die zweite Riegelkralle 21' in die versenkte Position verschwenkt wird. Vorzugsweise kann hier beim Entladen von Frachtgut, insbesondere von Containern mit entsprechend überstehenden Rändern, eine automatische Versenkung der Riegelkrallen 21, 21' bewirkt werden. Es ist möglich, das automatische Versenken der zweiten Riegelkralle 21' durch einen Container zu bewerkstelligen, der unmittelbar auf der Riegelbasis 23 aufliegt. Vorzugsweise umfasst das Riegelelement 20, wie in den Fig. 6 und 8 gezeigt, eine Transportrolle 26, die ein leichteres Verschieben des Containers entlang der x-Richtung ermöglicht. Die Transportrolle 26 kann derart ausgebildet und angeordnet sein, dass der Container mit einer besseren Hebelwirkung an der zweiten Riegelkralle 21', insbesondere an der Rampe 27 angreift. Vorzugsweise ist die Transportrolle 26 auf der zweiten Montagewelle 24' gelagert.

### Bezugszeichenliste

- 10: Lochschiene
- 11: Ausbuchtung
- 12: Schlitz
- 13: Lochschienenaussparung
- 20: Riegelelement
- 21, 21': Riegelkralle
- 23: Riegelbasis
- 24, 24': Montagewelle
- 26: Transportrolle
- 27: Rampe
- 30: Befestigungsschiene
- 32 bis 32": Fortsatz
- 34: Steg
- 37, 37': Fixierschraube
- 38, 38': hexagonale Sechskantöffnung
- d_{Loch}: Lochdurchmesser
- d_{Ver}: Fortsatzversatz
- d_{Steg}: Stegwandstärke
- d_{Fort}: Fortsatzdurchmesser
- d_{Sch}: Fixierschraubendurchmesser

## Patentansprüche

1. Funktionselement zur Befestigung in einer Sitzschiene (10) eines Flugzeuges, wobei die Sitzschiene (10) eine Vielzahl von Löchern (13) hat, die in Längs-, bzw. x-Richtung durch Schlitze (12) miteinander verbunden und in einem Rastermaß angeordnet sind, umfassend:
- eine Befestigungsschiene (30) mit einem im montierten Zustand in x-Richtung verlaufenden Steg (34) und einer Vielzahl von Fortsätzen (32-32"), welche den Steg (34) zur Bildung eines T-Profils in eine y-Richtung überragen, wobei die Befestigungsschiene (30) derart korrespondierend zur Sitzschiene (10) ausgebildet ist, dass die Befestigungsschiene (30) in die Sitzschiene (10) einlegbar und entlang der x-Richtung in eine Halteposition verschiebbar ist, in der die Fortsätze (32-32") zwischen den Löchern (13) unter den Schlitzen (12) sitzen,
- mindestens einen Fixierungszapfen (37, 37'), der beweglich an der Befestigungsschiene (30) angeordnet und in eine Sperrposition bringbar ist, in der der Fixierungszapfen (37, 37') in ein Loch (13) der Sitzschiene (10) so eingreift, dass das Funktionselement in x-Richtung fixiert ist,
wobei der Steg (34) zur Bildung einer Aufnahme für den Fixierungszapfen (37, 37') in der Sperrposition abschnittsweise unterbrochen ist,
**dadurch gekennzeichnet, dass**
die Befestigungsschiene (30) zur Bildung eines Abschnitts, auf dem der Fixierungszapfen (37, 37') in der Sperrposition aufliegt, einstückig ausgestaltet ist.

2. Funktionselement nach Anspruch 1,
**dadurch gekennzeichnet, dass**
die Befestigungsschiene (30) mindestens zwei Fortsätze (32-32") aufweist und mindestens ein Fixierungszapfen (37, 37') zwischen den Fortsätzen (32-32") angeordnet ist.

3. Funktionselement nach Anspruch 1 oder 2,
**dadurch gekennzeichnet, dass**
der Fixierungszapfen (37, 37') gegenüber den Fortsätzen (32-32") in x-Richtung um ein halbes Rastermaß versetzt angeordnet ist.

4. Funktionselement nach einem der vorhergehenden Ansprüche,
**dadurch gekennzeichnet, dass**
der Fixierungszapfen (37, 37') als Gewindebolzen ausgebildet ist.

5. Funktionselement nach einem der vorhergehenden Ansprüche,
**dadurch gekennzeichnet, dass**
das Funktionselement als Strangpressprofil ausgebildet ist, aus welchem die Fortsätze (32-32") gesondert herausgeformt sind.

6. Funktionselement nach einem der vorhergehenden Ansprüche,
**dadurch gekennzeichnet, dass**
das Funktionselement ein Riegelelement (20) mit mindestens einer Verriegelungshand (21, 21') ist.

7. Funktionselement nach Anspruch 6,
**gekennzeichnet durch**
mindestens eine Transportrolle (26), die auf einer Montagewelle (24, 24') der Verriegelungshand (21, 21') gelagert ist.

8. Anordnung, umfassend mindestens eine Sitzschiene (30) und mindestens ein Funktionselement (20) nach einem der vorhergehenden Ansprüche.

9. Verfahren zur Herstellung eines Funktionselements für ein Flugzeug mit einer Befestigungsschiene (30) zur Befestigung des Funktionselements in einer Sitzschiene (10), die eine Vielzahl von durch Schlitze (12) verbundenen Löchern (13) hat, umfassend die folgenden Schritte:
- Strangpressen eines Profils das sich in Längs-, bzw. x-Richtung erstreckt und bei dem ein erster und ein zweiter Flansch durch einen sich in z-Richtung erstreckenden Steg (34) verbunden sind,
- Abtragen von Aussparungen an dem zweiten Flansch zur Ausbildung von in einem Rastermaß beabstandeten Fortsätzen (32 bis 32"), die den Steg in eine y-Richtung überragen, wobei der Steg (34) und die Fortsätze (32 bis 32") derart ausgebildet sind, dass diese in die Lochschiene einsetzbar und in eine Halteposition verschiebbar sind, in der die Fortsätze zwischen den Löchern unter den Schlitzen (12) sitzen,
- Herstellen mindestens einer Bohrung in z-Richtung, die den Steg (34) teilweise unterbricht,
- Einsetzen mindestens eines Fixierungszapfens (37, 37') in die Bohrung derart, dass sich dieser innerhalb der Bohrung zwischen einer Sperrposition und einer Freigabeposition hin und her bewegen lässt, wobei der Fixierungszapfen (37, 37') zumindest abschnittsweise einen Durchmesser (d_{Sch}) hat der größer als eine Wandstärke (d_{Steg}) des Stegs (34) ist und in der Sperrposition in ein Loch der Lochschiene (10) eingreift, um das Funktionselement in der Halteposition in x-Richtung zu fixieren,
wobei das Herstellen der mindestens einen Bohrung in z-Richtung derart erfolgt, dass ein einstückiger Abschnitt der Befestigungsschiene (30) verbleibt, auf dem der Fixierungszapfen (37, 37') in der Sperrposition aufliegt.

10. Verfahren nach Anspruch 9,
**dadurch gekennzeichnet, dass**
das Herstellen der Bohrung ein Schneiden eines Gewindes zum Ein- und Ausdrehen des Fixierungszapfens (37, 37') umfasst.

11. Verfahren nach Anspruch 9 oder 10,
**dadurch gekennzeichnet, dass**
die Bohrung gegenüber den Fortsätzen (32-32") in x-Richtung um ein halbes Rastermaß versetzt angeordnet ist.

12. Verfahren nach einem der Ansprüche 9 bis 11,
**dadurch gekennzeichnet, dass**
die Fortsätze (32-32") zumindest entlang der y-Richtung einen Durchmesser (d_{Fort}) haben, der im Wesentlichen dem Durchmesser der Bohrung entspricht.

13. Verfahren nach einem der Ansprüche 9 bis 12,
**dadurch gekennzeichnet, dass**
der erste Flansch als Basis des Funktionselements ausgebildet ist.

14. Verfahren nach einem der Ansprüche 9 bis 13,
**dadurch gekennzeichnet, dass**
das Funktionselement ein Riegelelement (20) ist.

## Claims

1. Functional element for fixing in a seat rail (10) of an aircraft, wherein the seat rail (10) has a large number of holes (13) connected to one another in the longitudinal, or x, direction by way of slots (12) and arranged with modular spacing, including:
- a fixing rail (30) having a web plate (34), which in the mounted state runs in the x direction, and having a large number of protrusions (32-32") which extend out beyond the web plate (34) in a y direction to form a T-shaped profiled section, the fixing rail (30) being so constructed in complementary manner to the seat rail (10) that the fixing rail (30) can be introduced into the seat rail (10) and moved along the x direction into a holding position in which the protrusions (32-32") sit below the slots (12) between the holes (13),
- at least one fixing pin (37, 37') which is movably arranged on the fixing rail (30) and which can be brought into a blocking position, in which the fixing pin (37, 37') so engages in a hole (13) of the seat rail (10) that the functional element is fixed in the x direction,
the web plate (34) having a local interruption to form a receiving space for the fixing pin (37, 37') in the blocking position,
**characterised in that** the fixing rail (30), to form a location on which the fixing pin (37, 37') rests in the blocking position, is of integral construction.

2. Functional element according to claim 1,
**characterised in that**
the fixing rail (30) has at least two protrusions (32-32"), and at least one fixing pin (37, 37') is arranged between the protrusions (32-32").

3. Functional element according to claim 1 or 2,
**characterised in that**
the fixing pin (37, 37') is arranged offset in the x direction by half a modular spacing relative to the protrusions (32-32").

4. Functional element according to one of the preceding claims,
**characterised in that**
the fixing pin (37, 37') is in the form of a threaded bolt.

5. Functional element according to one of the preceding claims,
**characterised in that**
the functional element is constructed as an extruded profiled section, out of which the protrusions (32-32") are separately formed.

6. Functional element according to one of the preceding claims,
**characterised in that**
the functional element is a locking element (20) having at least one locking gripper (21, 21').

7. Functional element according to claim 6,
**characterised by**
at least one transport roller (26) mounted on a mounting spindle (24, 24') of the locking gripper (21, 21').

8. Arrangement including at least one seat rail (30) and at least one functional element (20) according to one of the preceding claims.

9. Method of producing a functional element for an aircraft, having a fixing rail (30) for fixing the functional element in a seat rail (10) which has a large number of holes (13) connected by slots (12), including the following steps:
- extruding a profiled section which extends in the longitudinal, or x, direction and in which a first flange and second flange are connected by a web plate (34) extending in the z direction,
- taking recesses out of the second flange to form protrusions (32 to 32") spaced apart in a modular spacing, which extend out beyond the web plate in a y direction, the web plate (34) and the protrusions (32 to 32") being so constructed that they can be inserted into the hole-containing rail and moved into a holding position in which the protrusions sit below the slots (12) between the holes,
- producing at least one bore in a z direction which forms a partial interruption of the web plate (34),
- inserting at least one fixing pin (37, 37') into the bore in such a way that the former can be moved back and forth within the bore between a blocking position and a release position, the fixing pin (37, 37') having, at least locally, a diameter (d_{Sch}) which is greater than a wall thickness (d_{Steg}) of the web plate (34) and engaging, when in the blocking position, in a hole of the hole-containing rail (10) in order to fix the functional element in the x direction in the holding position,
the production of the at least one bore in the z direction being carried out in such a manner that there remains an integral location of the fixing rail (30), on which the fixing pin (37, 37') rests in the blocking position.

10. Method according to claim 9,
**characterised in that**
the production of the bore includes cutting a thread for screwing the fixing pin (37, 37') in and out.

11. Method according to claim 9 or 10,
**characterised in that**
the bore is arranged offset in the x direction by half a modular spacing relative to the protrusions (32-32").

12. Method according to one of claims 9 to 11,
**characterised in that**
the protrusions (32-32") have, at least along the y direction, a diameter (d_{Fort}) which substantially corresponds to the diameter of the bore.

13. Method according to one of claims 9 to 12,
**characterised in that**
the first flange is constructed as the base of the functional element.

14. Method according to one of claims 9 to 13,
**characterised in that**
the functional element is a locking element (20).

## Revendications

1. Elément fonctionnel pour la fixation dans une glissière de siège (10) d'un avion, dans lequel la glissière de siège (10) présente une multiplicité de trous (13), qui sont reliés l'un à l'autre dans la direction longitudinale ou direction x par des fentes (12) et qui sont disposés à une distance de grille, comprenant:
- un rail de fixation (30) avec une âme (34) s'étendant dans la direction x à l'état monté et une multiplicité de protubérances (32-32") saillantes sur l'âme (34) pour la formation d'un profil en T dans une direction y, dans lequel le rail de fixation (30) est réalisé en correspondance avec la glissière de siège (10) de manière telle que le rail de fixation (30) puisse être inséré dans la glissière de siège (10) et puisse coulisser le long de la direction x dans une position de retenue dans laquelle les protubérances (32-32") sont logées entre les trous (13) sous les fentes (12),
- au moins un goujon d'immobilisation (37, 37'), qui est disposé de façon mobile sur le rail de fixation (30) et qui peut être amené dans une position de blocage, dans laquelle le goujon d'immobilisation (37, 37') est engagé dans un trou (13) de la glissière de siège (10) d'une manière telle que l'élément fonctionnel soit immobilisé dans la direction x,
dans lequel l'âme (34) est localement interrompue pour la formation d'un logement pour le goujon d'immobilisation (37, 37') dans la position de blocage, **caractérisé en ce que** le rail de fixation (30) est réalisé d'une seule pièce pour la formation d'une section, sur laquelle le goujon d'immobilisation (37, 37') repose dans la position de blocage.

2. Elément fonctionnel selon la revendication 1, **caractérisé en ce que** le rail de fixation (30) présente au moins deux protubérances (32-32") et au moins un goujon d'immobilisation (37, 37') est disposé entre les protubérances (32-32").

3. Elément fonctionnel selon la revendication 1 ou 2, **caractérisé en ce que** le goujon d'immobilisation (37, 37') est disposé en décalage d'une demi-distance de grille par rapport aux protubérances (32-32") dans la direction x.

4. Elément fonctionnel selon l'une quelconque des revendications précédentes, **caractérisé en ce que** le goujon d'immobilisation (37, 37') est un boulon fileté.

5. Elément fonctionnel selon l'une quelconque des revendications précédentes, **caractérisé en ce que** l'élément fonctionnel est un profilé extrudé, à partir duquel les protubérances (32-32") sont façonnées séparément.

6. Elément fonctionnel selon l'une quelconque des revendications précédentes, **caractérisé en ce que** l'élément fonctionnel est un élément de verrouillage (20) avec au moins une manette de verrouillage (21, 21').

7. Elément fonctionnel selon la revendication 6, **caractérisé par** au moins un galet de transport (26), qui est monté sur un axe de montage (24, 24') de la manette de verrouillage (21, 21').

8. Dispositif comprenant au moins une glissière de siège (10) et au moins un élément fonctionnel (20) selon l'une quelconque des revendications précédentes.

9. Procédé de production d'un élément fonctionnel pour un avion avec un rail de fixation (30) pour la fixation de l'élément fonctionnel dans une glissière de siège (10), qui comporte une multiplicité de trous (13) reliés l'un à l'autre par des fentes (12), comprenant les étapes suivantes:
- extruder un profilé qui s'étend dans la direction longitudinale ou direction x et dans lequel une première et une deuxième ailes sont reliées par une âme (34) s'étendant dans la direction z,
- creuser des évidements sur la deuxième aile pour former des protubérances (32 à 32") espacées d'une distance de grille, qui sont saillantes sur l'âme dans une direction y, dans lequel l'âme (34) et les protubérances (32 à 32") sont réalisées d'une manière telle que celles-ci puissent être insérées dans le rail perforé et puissent coulisser dans une position de retenue, dans laquelle les protubérances sont logées entre les trous sous les fentes (12),
- pratiquer au moins un trou foré dans la direction z, qui interrompt partiellement l'âme (34),
- introduire au moins un goujon d'immobilisation (37, 37') dans le trou foré, de telle manière que celui-ci puisse se déplacer en mouvement alterné à l'intérieur du trou foré entre une position de blocage et une position de libération, dans lequel le goujon d'immobilisation (37, 37') présente au moins localement un diamètre (d_{Sch}) qui est plus grand qu'une épaisseur de paroi (d_{Steg}) de l'âme (34) et s'engage, dans la position de blocage, dans un trou du rail perforé (10) afin d'immobiliser l'élément fonctionnel dans la position de retenue dans la direction x,
dans lequel la réalisation dudit au moins un trou foré dans la direction z est effectuée d'une manière telle qu'il subsiste une section en une seule pièce du rail de fixation (30), sur laquelle le goujon d'immobilisation (37, 37') repose dans la position de blocage.

10. Procédé selon la revendication 9, **caractérisé en ce que** la réalisation du trou foré comprend la taille d'un filet pour visser et dévisser le goujon d'immobilisation (37, 37').

11. Procédé selon la revendication 9 ou 10, **caractérisé en ce que** le trou foré est disposé en décalage d'une demi-distance de grille dans la direction x par rapport aux protubérances (32-32").

12. Procédé selon l'une quelconque des revendications 9 à 11, **caractérisé en ce que** les protubérances (32-32") présentent, au moins selon la direction y, un diamètre (d_{Fort}) qui correspond essentiellement au diamètre du trou foré.

13. Procédé selon l'une quelconque des revendications 9 à 12, **caractérisé en ce que** la première aile forme la base de l'élément fonctionnel.

14. Procédé selon l'une quelconque des revendications 9 à 13, **caractérisé en ce que** l'élément fonctionnel est un élément de verrouillage (20).
